# EUROPEAN PATENT APPLICATION

(11) **EP 3 544 144 A1**
(43) Date of publication of application: **25.09.2019**
(21) Application number: 18180929.4
(22) Date of filing: 29.06.2018
(51) Int. Cl.: H02J 7/00, H02J 7/35, B60L 8/00, B60L 58/20

(54) **SOLAR BATTERY SYSTEM AND CONROL METHOD THEREOF**

(30) Priority: 23.03.2018 CN 201810247432; 23.03.2018 CN 201820403826 U
(71) Applicant: Beijing Hanergy Solar Power Investment Co., Ltd., 101499 Beijing (CN)
(72) Inventor: YANG, Qiusheng, BEIJING, Beijing 101499 (CN)
(74) Representative: Allain, Laurent

(57) **Abstract**

A solar battery system and a control method thereof are provided. The solar battery system includes: a solar battery (1; 1A), which is configured to convert solar energy into electrical energy; a power generation control module (2; 25A), which is configured to store the electrical energy from the solar battery in a buffer battery (20; 20A); a charging control module (3; 3A), which is connected to the buffer battery and a power battery (30; 30A), and configured to charge the power battery with electrical energy in the buffer battery when a power battery charging condition is satisfied; and a power battery management system (7; 7A), which is connected to the charging control module and configured to control whether the charging control module charges the power battery and provide the charging control module with a charging parameter for charging the power battery.

## Description

### CROSS-REFERENCE TO RELATED APPLICATION

This application claims the priority of Chinese Patent Applications No. 201810247432.0 and No. 201820403826.6 submitted to the Chinese Intellectual Property Office on March 23, 2018, the entire contents of which are hereby incorporated by reference.

### TECHNICAL FIELD

The present disclosure relates to the technical field of vehicle batteries, in particular to a solar battery system and a control method thereof.

### BACKGROUND

Existing solar battery systems of vehicles generally include a solar battery, a charge controller, a power battery (traction battery) that powers the motor, and a low voltage battery that supplies power for low voltage loads. The power battery is charged during an ignition OFF signal to an ignition ON signal, and the low voltage battery is charged during the ignition ON signal to the ignition OFF signal. During charging of the power battery, a power battery management system (BMS) shall be in an active state to monitor a charging state of the power battery. An invention patent application No. CN201710150448.5 entitled "SOLAR BATTERY SYSTEM" in the name of TOYOTA MOTOR CO. LTD discloses that the temperature collected in the vehicle cabin is used for control, and charging and discharging are managed and controlled by comparing the temperature in the vehicle cabin with a set parameter. Although this method partially solves the problem due to temperature, it lacks an accurate management method and the control result is easily influenced by the surroundings.

### SUMMARY

In order to solve at least part of the problems in the prior art, in a first aspect of the present disclosure, there is provided a solar battery system, including:
a solar battery, which is configured to convert solar energy into electrical energy;
a power generation control module, which is configured to store the electrical energy from the solar battery in a buffer battery;
a charging control module, which is connected to the buffer battery and a power battery, and configured to charge the power battery with electrical energy in the buffer battery when a power battery charging condition is satisfied; and
a power battery management system, which is connected to the charging control module and configured to control whether the charging control module charges the power battery and provide the charging control module with a charging parameter for charging the power battery.

In an embodiment, in the above solar battery system, the power battery management system is configured to obtain a system state data and a power battery state data upon receiving a boost request from the charging control module, and provide the charging control module with charging enable information, wherein when the system state data and the power battery state data are normal, the charging enable information includes a charging allowance instruction that allows the charging control module to charge the power battery and a charging parameter for charging the power battery; while when the system state data or the power battery state data is abnormal, the charging enable information includes a charging non-allowance instruction that does not allow the charging control module to charge the power battery; and
the charging control module is configured to determine that the power battery charging condition is satisfied upon receiving the charging enable information including the charging allowance instruction from the power battery management system, so as to charge the power battery in accordance with the charging parameter in the charging enable information.

In an embodiment, in the above solar battery system, the charging control module includes:
a power monitor unit, which is configured to monitor power of the buffer battery and compare the power of the buffer battery with a first threshold and a second threshold;
a first charging determination unit, which is configured to send a boost request to the power battery management system according to a preset boost condition when the boost condition is satisfied and the power of the buffer battery reaches the first threshold; and configured to send a stop charging request to the power battery management system during charging of the power battery by the charging control module when the power of the buffer battery is less than the second threshold;
a data reception unit, which is configured to receive the charging enable information from the power battery management system; and
a charging logic unit, which is configured to charge the power battery intermittently according to a preset charging logic based on the charging parameter.

In an embodiment, in the above solar battery system, the power battery management system includes:
a monitor unit, which is configured to obtain a system state data and a power battery state data;
an activation control unit, which is configured to wake the power battery management system from a sleep state to an active state upon receiving the boost request from the charging control module;
a first charging processing unit, which is configured to determine the charging enable information based on the system state data and the power battery state data, and provide the charging control module with the charging enable information; and
a sleep control unit, which is configured to covert the power battery management system from the active state to the sleep state upon receiving the stop charging request from the charging control module when the system state data and the power battery state data are normal.

In an embodiment, in the above solar battery system, the power battery state data includes remaining power or an output voltage of the power battery, according to a preset remaining power threshold or output voltage threshold, the power battery state data includes a plurality of state levels; and the charging parameter is a plurality of groups of charging parameters corresponding to the state levels, respectively.

In an embodiment, in the above solar battery system, the boost condition satisfied includes: an ignition OFF signal is received.

In an embodiment, in the above solar battery system, the boost condition not satisfied includes: an ignition ON signal is received.

In an embodiment, in the above solar battery system, the boost condition satisfied further includes: a current system temperature is lower than a preset temperature threshold.

In an embodiment, in the above solar battery system, the power monitor unit is further configured to monitor power of a low voltage battery;
the charging control module includes a second charging determination unit which is configured to send a low voltage battery charging instruction to the charging logic unit when a preset low voltage battery charging condition is satisfied; and
the charging logic unit is configured to charge the low voltage battery according to a preset low voltage battery charging logic upon receiving the low voltage battery charging instruction.

In an embodiment, in the above solar battery system, the low voltage battery charging condition is: when the power of the buffer battery reaches the first threshold and the boost condition is satisfied, the charging enable information received from the power battery management system includes a charging non-allowance instruction; or when the power of the buffer battery reaches the first threshold and the boost condition is not satisfied; or when the power of the buffer battery does not reach the first threshold, power of the power battery reaches the first threshold and the boost condition is not satisfied; or when the buffer battery charges the power battery intermittently.

In an embodiment, in the above solar battery system, the low voltage battery charging condition is: at least one of the following conditions i) to iv) is achieved: i) a charging enable information comprising a charging non-allowance instruction from the power battery management system is received when the power of the buffer battery reaches the first threshold and the boost condition is satisfied; ii) the power of the buffer battery reaches the first threshold and the boost condition is not satisfied; iii) the power of the buffer battery does not reach the first threshold, power of the power battery reaches a preset third threshold and the boost condition is not satisfied; iv) the buffer battery is charging the power battery intermittently.

In an embodiment, the above solar battery system further includes: a communication unit for data exchange between the charging control module and the power battery management system.

In an embodiment, the above solar battery system further includes: a low voltage load driving module, which is connected to the communication unit, and configured to receive an external instruction and control operation of a low voltage load according to the external instruction.

According to another aspect of the present disclosure, there is provided a control method of a solar battery system, including:
monitoring power of a buffer battery and power of a power battery;
sending a boost request to a power battery management system when the power of the buffer battery reaches a first threshold and a boost condition is satisfied;
using the power battery management system to determine whether a power battery can be charged, and to provide a charging parameter for the power battery when it is determined that the power battery can be charged;
charging the power battery with electrical energy in the buffer battery in accordance with the charging parameter.

In an embodiment, in the above control method of a solar battery system, the step of charging the power battery with electrical energy in the buffer battery in accordance with the charging parameter includes:
charging the power battery intermittently with the power in the buffer battery in accordance with the charging parameter and a preset charging logic.

In an embodiment, in the above control method of a solar battery system, the step of using the power battery management system to determine whether a power battery can be charged includes:
detecting a system state by the power battery management system, and it is determined that the power battery can be charged when the system state is normal.

In an embodiment, in the above control method of a solar battery system, the step of providing the charging parameter includes:
detecting a power battery state, and obtaining remaining power or an output voltage of the power battery;
comparing a current remaining power or output voltage of the power battery with a corresponding threshold to determine a current state level of the power battery;
determining the charging parameter according to a preset correspondence table of state levels and charging parameters.

In an embodiment, in the above control method of a solar battery system, there are a plurality of remaining power or output voltage thresholds for the power battery, and the plurality of thresholds determines a plurality of state levels.

In an embodiment, the above control method of a solar battery system may further include:
causing the power battery management system to wake from a sleep state to an active state when the power battery management system receives the boost request;
monitoring power of the buffer battery during charging of the power battery, and sending a stop charging request to the power battery management system when the power of the buffer battery is less than the second threshold;
converting the power battery management system from the active state into the sleep state when the power battery management system receives the stop charging request for the power battery.

In an embodiment, in the above control method of a solar battery system, after the step of sending a stop charging request to the power battery management system, charging of the power battery is stopped.

In an embodiment, in the above control method of a solar battery system, after the power battery management system receives the stop charging request for the power battery, a charging prohibition instruction is sent.

In an embodiment, after the power battery management system receives the stop charging request for the power battery, the above control method of a solar battery system further includes:
detecting a system state, and timing according to a preset timing parameter when the system state is normal;
converting from the active state into the sleep state when the timing is ended.

In an embodiment, in the above control method of a solar battery system, the boost condition satisfied includes: an ignition OFF signal has been received.

In an embodiment, in the above control method of a solar battery system, the boost condition not satisfied includes: receiving an ignition ON signal.

In an embodiment, in the above control method of a solar battery system, the boost condition satisfied further includes: a current system temperature is lower than a preset temperature threshold.

In an embodiment, the above control method of a solar battery system further includes:
monitoring power of a low voltage battery;
charging the low voltage battery according to a preset low voltage battery charging logic when a preset low voltage battery charging condition is satisfied.

In an embodiment, in the above control method of a solar battery system, the low voltage battery charging condition is: when the power of the buffer battery reaches the first threshold and the boost condition is satisfied, the power battery management system does not allow to charge the power battery; or the power of the buffer battery reaches the first threshold and the boost condition is not satisfied; or the buffer battery charges the power battery intermittently; or, a voltage-decreasing instruction is received;
the low voltage battery charging logic corresponding to the above low voltage battery charging condition is: the low voltage battery is charged by the buffer battery;
the low voltage battery charging condition may also be:
when the power of the buffer battery does not reach the first threshold, power of the power battery reaches a preset threshold and the boost condition is not satisfied; or, receiving a voltage decreasing instruction;
the low voltage battery charging logic corresponding to the above low voltage battery charging condition is: the low voltage battery is charged by the power battery.

In an embodiment, in the above control method of a solar battery system, the low voltage battery charging condition is: any one of the following conditions i) to iv) is achieved:
i) the power battery management system does not allow to charge the power battery when the power of the buffer battery reaches the first threshold and the boost condition is satisfied;
ii) the power of the buffer battery reaches the first threshold and the boost condition is not satisfied;
iii) the buffer battery charges the power battery intermittently, and
the low voltage battery charging logic corresponding to the low voltage battery charging condition is: the low voltage battery is charged by the buffer battery

In an embodiment, in the above control method of a solar battery system, the low voltage battery charging condition is: the power of the buffer battery does not reach the first threshold, the power of the power battery reaches the first threshold and the boost condition is not satisfied; and
the low voltage battery charging logic corresponding to the low voltage battery charging condition is: the low voltage battery is charged by the power battery.

In an embodiment, in the above control method of a solar battery system, the current system temperature is obtained through a temperature sensor provided in the solar battery system; or through querying a preset correspondence table of a system run-time and the current system temperatures based on the system run-time.

According to another aspect of the present disclosure, there is provided a computer-readable storage medium storing instructions which, when executed by a processor, cause the processor to perform any of the above control methods of a solar battery system.

The embodiments solves the accessing problem in a high voltage charging mode, i.e., the present disclosure realizes control by a BMS management system in the form of upper and lower computers when performing high voltage charging on a power battery, thus enabling an accurate charging management that is not easily affected by external influences.

### BRIEF DESCRIPTION OF FIGURES

Hereinafter, the preferred embodiments of the present disclosure will be further described in detail with reference to the accompanying figures, in which:
Fig. 1 is a functional block diagram of a solar battery system according to the present disclosure;
Fig. 2 is a functional block diagram of a charging control module according to an embodiment of the present disclosure;
Fig. 3 is a functional block diagram of a power battery management system according to an embodiment of the present disclosure;
Fig. 4 is a flowchart of the control method according to the present disclosure;
Fig. 5 is a flowchart of a control process of the charging control module in the present disclosure;
Fig. 6 is a flowchart of a control process of the BMS in the present disclosure;
Fig. 7 is a functional block diagram of a charging control module according to another embodiment of the present disclosure;
Fig. 8 is a functional block diagram of a solar battery system according to exemplary embodiment one of the present disclosure;
Fig. 9 is a functional block diagram of a microcomputer in the exemplary embodiment one; and
Fig. 10 is a functional block diagram of a solar battery system according to exemplary embodiment two of the present disclosure.

### DETAILED DESCRIPTION

To make the objects, technical solutions, and advantages of the embodiments of the present disclosure clearer, the technical solutions in the embodiments of the present disclosure will now be described clearly and completely with reference to the accompanying figures of the embodiments of the present disclosure. Obviously, the described embodiments are only a part, not all, of the embodiments of the present disclosure. Based on the embodiments of the present disclosure, all the other embodiments obtained by those ordinary skilled in the art without any creative labor fall into the protection scope of the present disclosure. It is noted that, as used in this specification and the appended claims, the term "a" or "an" includes plural referents unless expressly and unequivocally limited to one referent.

In the following detailed description, reference may be made to the accompanying figures that are included as part of this application to illustrate certain embodiments of the application. In the figures, like reference numbers describe substantially similar components throughout different figures. Each specific embodiment of the application is described in sufficient detail below so that those skilled in the art with related knowledge and technology in the art can implement the technical solution of the present application. It is to be understood that other embodiments may be utilized or structural, logical, or electrical changes may be made to the embodiments of the present application.

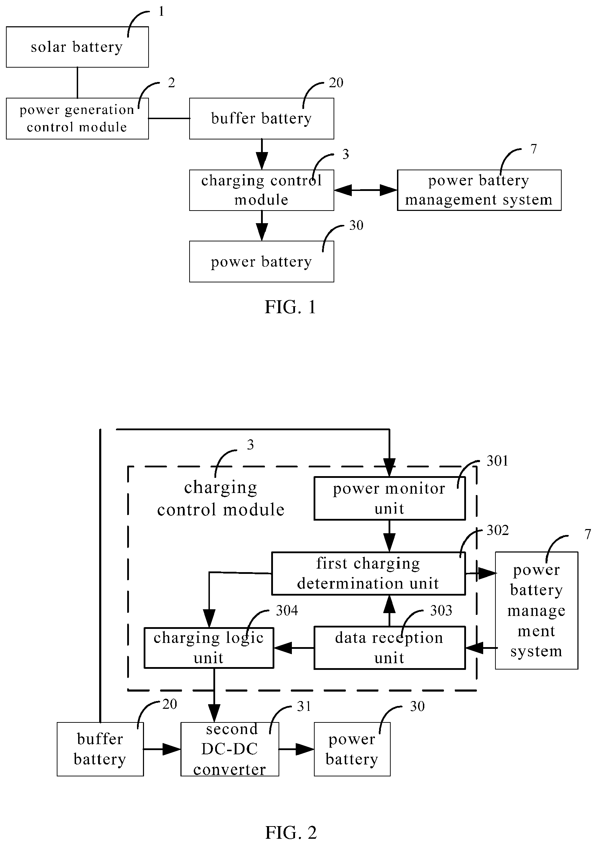

Referring to Fig. 1, which is a functional block diagram of the solar battery system according to the present disclosure. As shown in Fig. 1, the solar battery system includes: a solar battery 1, a power generation control module 2, a buffer battery 20, a charging control module 3 and a power battery management system (also simply referred to as BMS) 7. The solar battery 1 converts solar energy into electrical energy. The power generation control module 2 stores the electrical energy from the solar battery in the buffer battery 20. The charging control module 3 is connected to the buffer battery 20, and configured to charge the power battery 30 with the power in the buffer battery 20 when certain condition is satisfied. In a preferred embodiment, the charging control module 3 charges the power battery 30 according to a charging parameter and a preset charging logic. The BMS 7 is connected to the charging control module 3 and configured to control whether the charging control module 3 charges (is allowed to charge) the power battery 30, and provide the charging control module 3 with a charging parameter for charging the power battery 30.

The solar battery 1 may be a plate-shaped module including a plurality of solar batteries connected in series or in parallel. The solar battery 1 is usually mounted on a sunny side of a vehicle, for example, on a surface of the vehicle roof or on a sunshade. The solar battery 1 may output electrical energy corresponding to an amount of solar radiation (for example, a maximum output of 50-2000 W). Any type of solar battery cell may be used in the present disclosure as the solar battery cell in the solar battery 1. For example, the solar battery cell may be, but not limited to, a monocrystalline silicon solar battery, a polycrystalline silicon solar battery, an amorphous silicon film solar battery, a copper indium gallium selenide film solar battery, a cadmium telluride film solar battery, a gallium arsenide film solar battery, a dye sensitized solar battery or an organic flexible solar battery.

The buffer battery 20 is a power storage device that temporarily stores the electrical energy generated by the solar battery 1. The voltage rating of the buffer battery 20 may have a voltage level of 12V, 24V or even higher. The buffer battery 20 may be, for example, a lead-acid battery, a nickel-metal hydride battery, a lithium-ion battery, or the like.

The power battery 30 is a power storage device having a relatively higher voltage and supplying electrical energy (power) to a vehicle motor. For example, an output voltage of the power battery 30 is 200V-400V or 400V-700V. The power battery 30 may implement, for example, a nickel-metal hydride battery or a lithium-ion battery.

In the present disclosure, the charging control module 3 may realize charging control of the power battery. Referring to Fig. 2, which is a functional block diagram of the charging control module 3 in an embodiment of the present disclosure. In the embodiment, in order to achieve voltage and electric current matching during charging from the buffer battery 20 to the power battery 30, a second DC-DC converter 31 may be connected between the buffer battery 20 and the power battery 30.

The charging control module 3 includes a power monitor unit 301, a first charging determination unit 302, a data reception unit 303, and a charging logic unit 304. The power monitor unit 301 is configured to monitor power (charge level) of the buffer battery 20, compare the power of the buffer battery 20 with a first threshold and a second threshold and sent the comparison result to the first charging determination unit 302. In actual implementations, battery sensor(s) may be used to obtain data such as the power of each battery (including the power battery and the low voltage battery).

A boost condition, i.e., a condition for charging the power battery 30, is set in the system. The boost condition includes: an ignition OFF signal in the system is detected. During driving of the vehicle, the power battery 30 is in an operation state for outputting electrical energy to the motor, and generally, the power battery cannot be charged at this time. When the vehicle is off, i.e., the ignition signal becomes OFF, the power battery 30 is no longer working and thus can be charged, and then the boost condition is satisfied. In a preferred embodiment, a current temperature value of the system may be further used to determine whether the boost condition is satisfied. When the ignition signal is OFF, if the temperature is within an allowable range, i.e., no greater than a preset temperature threshold, it is determined that the boost condition is satisfied. The addition of the temperature condition is based on the consideration of avoiding high voltage charging of the system when the temperature is too high, which may lead to a higher system temperature, causing device damages or even fire.

The first charging determination unit 302 detects the ignition signal to determine whether the boost condition is satisfied. If a reference to the system temperature is also desired, the system temperature may be obtained through a provided temperature sensor; or through querying a preset correspondence table of a system run-time and the current system temperatures based on the system run-time.

The first charging determination unit 302 sends a boost request to the BMS 7 when receiving the information indicating that the power of the buffer battery reaches the first threshold from the power monitor unit 301 and determining that the boost condition is satisfied. In the process of charging the power battery 30, the first charging determination unit 302 sends a stop charging request to the BMS 7 when receiving the information indicating that the power of the buffer battery is less than the second threshold.

The data reception unit 303 receives charging enable information from the power battery management system (BMS) 7 that includes either a charging allowance instruction and a corresponding charging parameter, or a charging non-allowance instruction. The data reception unit 303 sends the corresponding charging parameter to the charging logic unit 304 upon receiving the charging allowance instruction. The charging logic unit 304 charges the power battery according to the charging parameter. In a preferred embodiment, the charging logic unit 304 charges the power battery intermittently according to the charging parameter and a preset charging logic. The charging logic includes, for example, sending a corresponding instruction sequence to the second DC-DC converter 31 according to a parameter such as a time parameter or a voltage or current parameter required for completing the intermittent charging. The second DC-DC converter 31 intermittently charges the power battery 30 according to the instruction. Individual charging durations for each charging may be equal, or the charging durations may be set to gradually decrease in an arithmetic progression. The charging logic unit 304 may also modify the charging parameter in the instruction by referring to the system temperature. For example, the higher the system temperature is, the shorter the charging duration will be set.

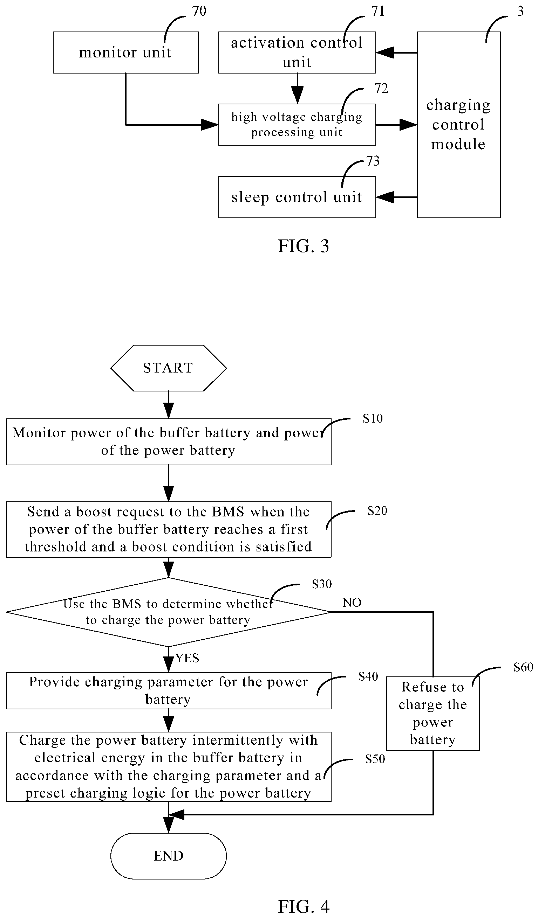

The BMS 7 may be an electronic control unit that performs the entire vehicle integrated-control in an electric vehicle. The BMS 7 may collect data corresponding to a driving state, an operation state, and states of various units of the vehicle (e.g., the power battery and the motor). As shown in Fig. 3, for the functions to be completed in the present disclosure, the BMS 7 includes, but not limited to, a monitor unit 70, an activation control unit 71, a first charging processing unit 72, and a sleep control unit 73. The monitor unit 70 obtains a system state data and a power battery state data. The system state data includes various data such as a temperature inside the vehicle, a temperature of the power battery, and the like. The activation control unit 71 wakes the BMS 7 from a sleep state to an active state upon receiving the boost request from the charging control module 3, thus realizing safety monitoring during charging of the power battery 30. The first charging processing unit 72 determines the charging enable information based on the system state data and the power battery state data, and provides the charging enable information to the charging control module 3. When both the system state data and the power battery state data are normal, the charging enable information includes a charging allowance instruction that allows the charging control module 3 to charge the power battery 30 and a charging parameter for charging the power battery; while when the system state data or the power battery state data is abnormal, the charging enable information includes a charging non-allowance instruction that does not allow the charging control module 3 to charge the power battery 30. The sleep control unit 73 determines whether the system state data and the power battery state data are normal upon receiving the stop charging request from the charging control module 3, and then, when it is determined that the system state data and the power battery state data are normal, the sleep control unit 73 coverts the BMS 7 from the active state to the sleep state.

Referring to Fig. 4, which is a flowchart showing the control method according to the present disclosure. The control process of the battery system is as follows:
In step S10, monitoring power of the buffer battery 20 and power of the power battery 30, and only charging the power battery 30 when the power of the buffer battery 20 reaches a sufficient value; and, for safety purposes, the power of the power battery 30 is required to be monitored during charging of the power battery 30.
In step S20, sending a boost request to the BMS 7 when the power of the buffer battery 20 reaches a first threshold (indicating that the power of the buffer battery reaches a power level index where the buffer battery can charge other batteries) and the boost condition is satisfied.
In step S30, converting the BMS 7 from a sleep state to an active state upon receiving the boost request, and determining whether the power battery can be charged. If it is determined that the power battery can be charged, proceeding with step S40; and if it is determined that the power battery cannot be charged, refusing the charge of the power battery in step S60.
In step S40, providing a charging parameter for the power battery.
In step S50, charging the power battery 30 intermittently with the power in the buffer battery 20 in accordance with the charging parameter and a preset charging logic for the power battery.

The above steps include the control processes of both the charging control module and the BMS.

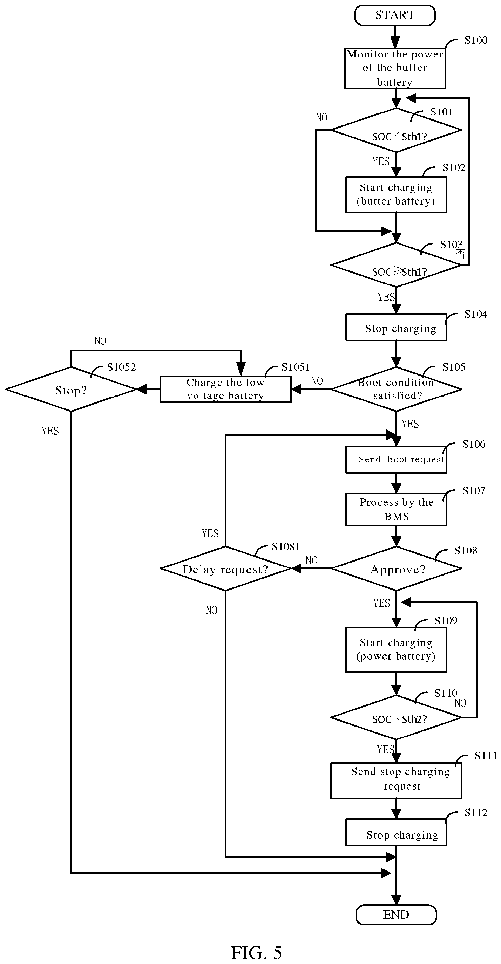

Referring to Fig. 5, which is a flowchart of a control process of the charging control module.

In step S100, monitoring the power of the buffer battery 20. The power is obtained, for example, by receiving data from a battery sensor.

In step S101, determining whether the power soc of the buffer battery 20 is less than the first threshold Sth1. If the power soc of the buffer battery 20 is less than the first threshold Sth1, i.e., does not reach the first threshold Sth1, charging the buffer battery 20 in step S102.

In step S103, determining whether the power soc of the buffer battery 20 is greater than or equal to the first threshold Sth1. If so, stopping charging the buffer battery 20 in step S104; and if not, returning to step S100.

In step S105, determining whether a boost condition is satisfied. If it is determined that the boost condition is satisfied, sending a boost request to the BMS 7 in step S106; and if it is determined that the boost condition is not satisfied, charging a low voltage battery (which will be described in more detail hereafter) in step S 1051. In step S1052, determining whether to stop charging the low voltage battery, for example, by collecting the power of the low voltage battery. If it is determined to stop charging the low voltage battery, ending charging of the low voltage battery; and if it is determined not to stop charging the low voltage battery, continuing charging of the low voltage battery in step S1051.

In step S107, the BMS 7 receives the boost request, and determines whether to approve the boost request according to the current situation. If the BMS 7 determines to approve the boost request, it returns a message of approval (for example, charging enable information including a charging allowance instruction); if the BMS 7 determines not to approve the boost request, it returns a message of disapproval (for example, charging enable information including a charging non-allowance instruction).

In step S108, determining whether a message of approval is received. If it is determined that the message is received, charging the power battery 30 in step S109; And if it is determined that the message is not received, determining in step S1081 whether it is necessary to delay a re-request, and if it is necessary to delay the re-request, turning to step S106 to send the boost request after the delay; if it is not necessary to delay the re-request, ending the procedure.

In step S110, during charging of the power battery, continuously monitoring the power of the buffer battery and determining whether the power of the buffer battery 20 is less than the second threshold sth2. If the power of the buffer battery 20 is less than the second threshold sth2, sending a stop charging request in step Sill and stop charging in step S112. If the power soc of the buffer battery 20 is greater than or equal to the second threshold sth2, returning to step S109 to continue to charge the power battery 30.

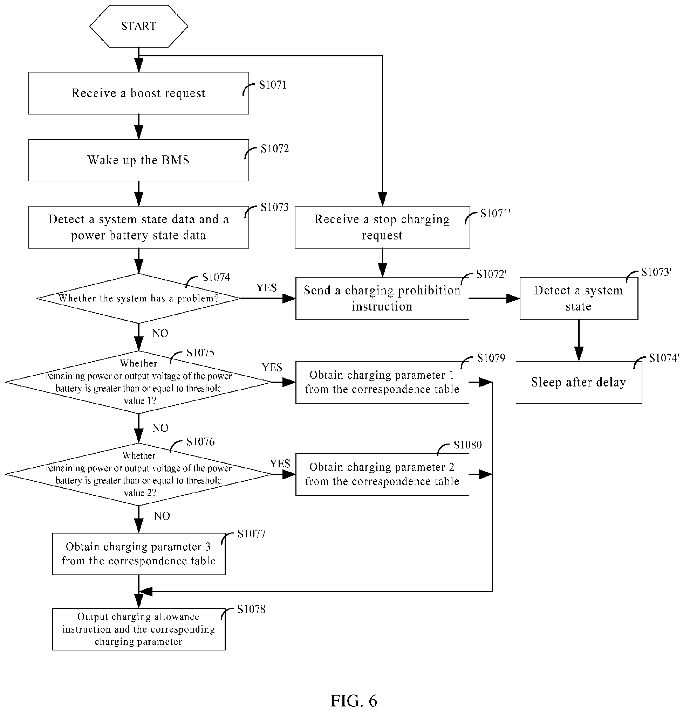

On the BMS 7 side, the control process is as shown in Fig. 6.

In step S1071, receiving a boost request from the charging control module 3.

In step S1072, waking the BMS 7 after receiving the boost request.

In step S1073, detecting a system state data and a power battery state data.

In step S1074, determining whether the current system has any problem, such as the existence of fault information or a too high temperature. If there is problem, sending a charging prohibition instruction to the charging control module 3 in step S1072'. After detecting the system again in step S1073', delaying the sleep (i.e., timing a preset time and sleeping when the timing is ended) in step S1074'. If it is determined in step S1074 that the system has no problem, turning to step S1075.

In step S1075, determining whether the current power of the power battery 30 is greater than or equal to a threshold value 1. If the current power of the power battery 30 is greater than or equal to the threshold value 1, obtaining a corresponding charging parameter 1 in step S1079 by querying a correspondence table of power and charging parameters in the system, and then turning to step S1078. In the present disclosure, the charging parameter used during charging of the power battery 30 is divided into a plurality of state levels according to current remaining power threshold values of the power battery, and different state levels correspond to different charging parameters. If the current power of the power battery 30 is less than the threshold 1, turning to step S1076.

In step S1076, determining whether the current power of the power battery 30 is greater than or equal to a threshold value 2. If the current power of the power battery 30 is greater than or equal to the threshold value 2, obtaining a corresponding charging parameter 2 in step S1080 by querying the correspondence table of power and charging parameters, and then turning to step S1078. If the current power of the power battery 30 is less than the threshold 2, turning to step S1077. Herein, the threshold 1 is greater than the threshold 2.

In step S1077, querying and obtaining a corresponding charging parameter 3 from the correspondence table of power and charging parameters.

In step S1078, outputting a charging allowance instruction and a charging parameter to the charging control module 3.

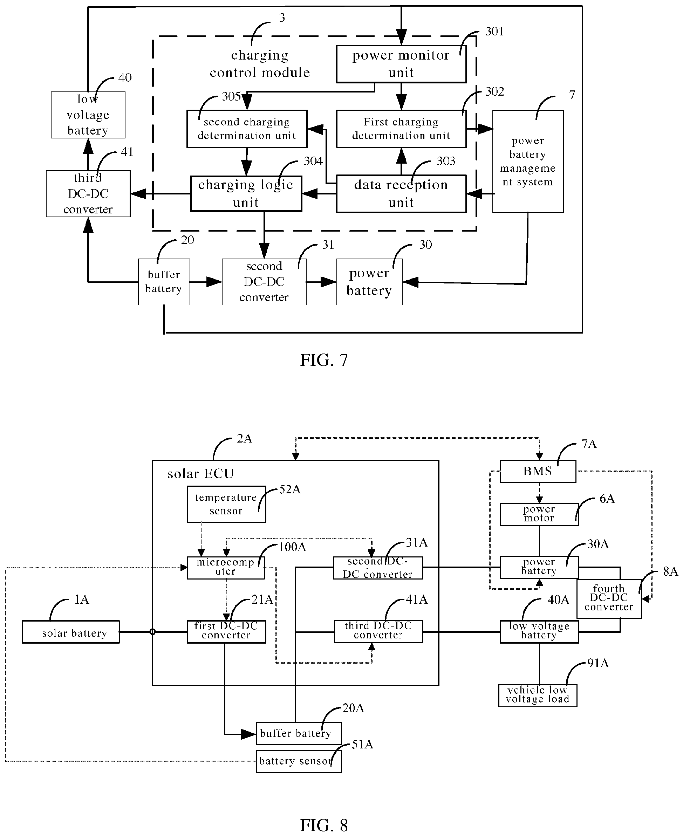

When receiving a stop charging request in step S1071', turning to step S1072', sending a charging prohibition instruction to the charging control module 3 (or turning to step S1073', instead of sending a charging prohibition instruction to the charging control module 3, stopping charging by the charging control module 3 itself; see step S112 in Fig. 7).

The present disclosure can also realize charging of a low voltage battery in the process of charging of the power battery. The low voltage battery provides electrical energy for low voltage loads in vehicles, and the low voltage batteries is typically a battery with an output voltage of 12V, such as a lead battery, a nickel-metal hydride battery, or a lithium-ion battery. The low voltage load is, for example, a vehicle wiper, a vehicle lamp, or various electronic control systems in a vehicle.

Therefore, the charging control module 3 in the present disclosure may further include a second charging determination unit 305. As shown in Fig. 7, the power monitor unit 301 also monitors power of the low voltage battery and sends the monitored power to the second charging determination unit 305. The second charging determination unit 305 obtains various data from the data reception unit 303. The second charging determination unit 305 sends a low voltage battery charging instruction to the charging logic unit 304 when a preset low voltage battery charging condition is satisfied.

The low voltage battery charging condition for charging the low voltage battery 40 includes various kinds of conditions. For example, the low voltage battery charging condition is: the power of the buffer battery 20 reaches the first threshold Sth1 and the boost condition is satisfied, and the charging enable information received from the BMS 7 includes a charging non-allowance instruction; or as shown in Fig. 5, the low voltage battery charging condition is: the power of the buffer battery reaches the first threshold Sth1 and the boost condition is not satisfied; or, the low voltage battery charging condition is: the power of the buffer battery 20 does not reach the first threshold Sth1, while the power of the power battery 30 reaches a preset third threshold and the boost condition is not satisfied, at which time, the power battery 30 is not charged but may charge the low voltage battery 40; or the low voltage battery charging condition is: the buffer battery 20 charges the power battery 30 intermittently, and may charge the low voltage battery 40 at the same time.

In specific implementations, the above charging control module may be implemented by a microcomputer, which can realize the functions of various units in the charging control module, and the components thereof include a CPU, a RAM, a ROM, and input and output terminals and the like. The microcomputer may implement the control method of the present disclosure by executing various programs stored in the ROM on the CPU.

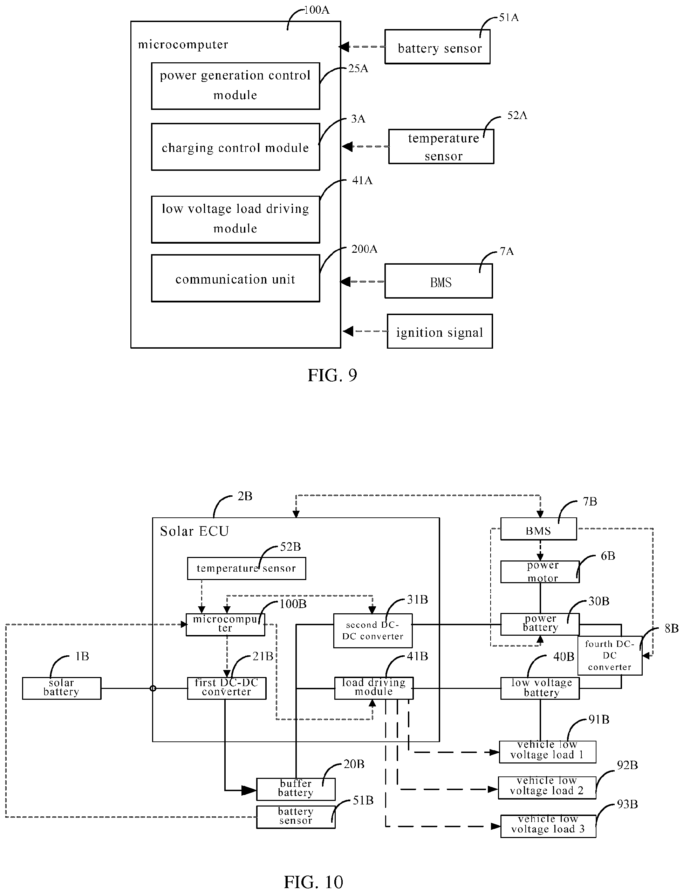

Referring to Fig. 8, which is a functional block diagram of an exemplary embodiment (embodiment one) of the present disclosure. In this embodiment, the solar battery system includes a solar battery 1A and a solar electronic control unit (solar ECU) 2A. In that, the solar ECU 2A includes a microcomputer 100A, a first DC-DC converter 21A, a second DC-DC converter 31A, a third DC-DC converter 41A, and a temperature sensor 52A. Referring to Fig. 9, which is a functional block diagram of the microcomputer 100A. The microcomputer 100A includes a power generation control module 25A for performing power generation control; a charging control module 3A for controlling charging of various batteries, i.e., controlling charging of the power battery, the buffer battery and the low voltage battery; an optional a low voltage load driving module (not shown) for controlling a low voltage load; and a communication unit 200A. The implementation manner of the communication unit 200A may be flexibly selected according to a specific application (such as being a one-to-one communication line, or forming a vehicle-mounted network, the communication unit acts as one of the communication nodes therein to conduct data exchange with other devices), thus realizing data reception and transmission between the charging control module 3A and the BMS 7A, as well as collection and monitoring of various state data, for example, receiving data from the temperature sensor 52A, or an ignition signal, or a message from the BMS 7; or sending a boost request message or stop charging request to the BMS 7, or the like (see the description of the flow below).

The first DC-DC converter 21A connects the solar battery 1A to the buffer battery 20A, and the power generation control module 25A in the microcomputer 100A is provided with a control logic, for example, for achieving a maximum power point tracking (MPPT) control. According to the control logic, a corresponding instruction is sent to the first DC-DC converter 21A. The first DC-DC converter 21A executes the MPPT control of the solar panel in response to the instruction.

The second DC-DC converter 31A connects the buffer battery 20A to the power battery 30A and receives an instruction from the charging control module 3A in the microcomputer 100A to realize intermittent charging of the power battery 30A by the buffer battery 20A, or to realize charging of the low voltage battery 40A by the power battery 30 through control of the BMS 7A. The power battery 30A provides electrical energy for operating a power motor 6A.

The third DC-DC converter 41A receives a charging instruction from the charging control module 3A in the microcomputer 100A, and realizes charging of the low voltage battery 40A by the buffer battery 20A. The low voltage battery 40A provides electrical energy to a low voltage load 9A.

In the present embodiment, there are a plurality of battery sensors 51A (for convenience, only one battery sensor is shown in the figure) for detecting various states (current, voltage, temperature, charging state, etc.) of the buffer battery 20A, the low voltage battery 40A, and the power battery 30A, respectively. The battery sensors 51A are in communication with the solar ECU 2A through a communication unit such as a one-to-one communication line or a Controller Area Network (CAN). The detected various data are transmitted to the microcomputer 100A in the solar ECU 2A. The temperature sensor 52A is used to obtain a system temperature and send the temperature to the microcomputer 100A.

The BMS 7A is an electronic control unit for integrated control of the entire vehicle corresponding to a driving state, an operation state, and states of various units (e.g. the power battery and the motor) of the vehicle, and for controlling whether or not to charge the power battery 30A.

In the embodiment, the second DC-DC converter 31 may be a bidirectional converter, through which not only the buffer battery 20A can charge the power battery 30A, but also the power battery 30A can charge the buffer battery 20A.

Some or all of the various above mentioned DC-DC converters may be disposed outside the solar ECU.

Referring to Fig. 10, which is a functional block diagram of the exemplary embodiment two of the present disclosure. The embodiment two differs from the embodiment one in that, the embodiment two further includes a load driving module 41B; by the driving circuit and the module design, part of the electrical system and the external system of the vehicle are powered; and when the ignition signal is OFF, the operation of the low voltage loads 91B, 92B, 93B, and the like in the vehicle may be controlled through a remote APP controller.

In the present disclosure, operation control of the load driving module 41B or the third DC-DC converter 41A is executed during a time period from the ignition ON signal (IG-ON) of the vehicle to receiving the ignition off (IG-OFF) signal (specifically, the initial processing after completion of IG-ON) so that the low voltage battery is charged with the electrical energy generated by the solar battery panel (buffer battery 20A). The amount of the electrical energy output from the DC-DC converter to the low voltage battery may be adjusted according to the state of charge (SOC) of the low voltage battery input from the battery sensor.

The second DC-DC converter 31A is operated during a period from the IG-OFF to the IG-ON of the vehicle, and the power battery 30A and the low voltage battery 40A are controlled to be charged intermittently with the power generated by the solar battery panel (buffer battery 20A). That is, the charging control module 3A performs a pulse charging in which a charging period and a stop period are repeated over and over again. At the time of charging of the power battery 30A, the BMS needs to be maintained in the active state and to monitor the power battery. In the mode of continuously charging the power battery, since the power consumption of the BMS may be greater than a power generation capacity of the solar battery panel, the present disclosure adopts intermittent charging to reduce the time for which the BMS remains active, thereby suppressing the power consumption of the BMS and saving electrical energy. At IG-OFF, the load driving module may control certain electrical appliances in the vehicle to work through a remote APP controller.

The present disclosure solves the accessing problem in a high voltage charging mode, i.e., the present disclosure realizes control by a BMS management system in the form of upper and lower computers when performing high voltage charging on a power battery, thus enabling an accurate charging management that is not easily affected by external influences. In addition, according to some embodiments of the present disclosure, the power battery management system does not have to be constantly activated, thus avoiding the situation where the power consumption of the power battery management system is greater than the power generation capacity of the solar battery panel. Further, according to some embodiments of the present disclosure, a low voltage battery may be charged when a preset low voltage battery charging condition is satisfied so that the electrical energy generated by the solar energy can be reasonably used.

The above embodiments are only used for describing the present disclosure, and are not intended to limit the present disclosure. Those skilled in the related art may make various changes and modifications without departing from the scope of the present disclosure. Therefore, all equivalent technical solutions shall also fall within the scope of the present disclosure.

## Claims

1. A solar battery system, comprising:
a solar battery (1; 1A), which is configured to convert solar energy into electrical energy;
a power generation control module (2; 25A), which is configured to store the electrical energy from the solar battery (1; 1A) in a buffer battery (20; 20A);
a charging control module (3; 3A), which is connected to the buffer battery (20; 20A) and a power battery (30; 30A), and configured to charge the power battery (30; 30A) with electrical energy in the buffer battery (20; 20A) when a power battery charging condition is satisfied; and
a power battery management system (7; 7A), which is connected to the charging control module (3; 3A) and configured to control whether the charging control module (3; 3A) charges the power battery (30; 30A) and provide the charging control module (3; 3A) with a charging parameter for charging the power battery (30; 30A).

2. The solar battery system according to claim 1, wherein
the power battery management system (7; 7A) is configured to obtain a system state data and a power battery state data upon receiving a boost request from the charging control module (3; 3A), and provide the charging control module (3; 3A) with charging enable information, wherein when the system state data and the power battery state data are normal, the charging enable information comprises a charging allowance instruction that allows the charging control module (3; 3A) to charge the power battery (30; 30A) and a charging parameter for charging the power battery (30; 30A); while when the system state data or the power battery state data is abnormal, the charging enable information comprises a charging non-allowance instruction that does not allow the charging control module (3; 3A) to charge the power battery (30; 30A); and
the charging control module (3; 3A) is configured to determine that the power battery charging condition is satisfied upon receiving the charging enable information comprising the charging allowance instruction from the power battery management system (7; 7A), so as to charge the power battery (30; 30A) in accordance with the charging parameter in the charging enable information.

3. The solar battery system according to claim 2, wherein the charging control module (3; 3A) comprises:
a power monitor unit (301), which is configured to monitor power of the buffer battery (20; 20A) and compare the power of the buffer battery (20; 20A) with a first threshold and a second threshold;
a first charging determination unit (302), which is configured to send a boost request to the power battery management system (7; 7A) according to a preset boost condition when the boost condition is satisfied and the power of the buffer battery (20; 20A) reaches the first threshold; and configured to send a stop charging request to the power battery management system (7; 7A) during charging of the power battery (30; 30A) by the charging control module (3; 3A) when the power of the buffer battery (20; 20A) is less than the second threshold;
a data reception unit (303), which is configured to receive the charging enable information from the power battery management system (7; 7A); and
a charging logic unit (304), which is configured to charge the power battery (30; 30A) intermittently according to a preset charging logic based on the charging parameter.

4. The solar battery system according to any one of claims 1-3, wherein the power battery management system (7; 7A) comprises:
a monitor unit (70), which is configured to obtain a system state data and a power battery state data;
an activation control unit (71), which is configured to wake the power battery management system (7; 7A) from a sleep state to an active state upon receiving the boost request from the charging control module (3; 3A);
a first charging processing unit (72), which is configured to determine the charging enable information based on the system state data and the power battery state data, and provide the charging control module (3; 3A) with the charging enable information; and
a sleep control unit, which is configured to covert the power battery management system (7; 7A) from the active state to the sleep state upon receiving a stop charging request from the charging control module (3; 3A) when the system state data and the power battery state data are normal.

5. The solar battery system according to claim 3, wherein the boost condition comprises: an ignition OFF signal has been received, and preferably, the boost condition further comprises: a current system temperature is lower than a preset temperature threshold.

6. The solar battery system according to claim 5, wherein
the power monitor unit (301) is further configured to monitor power of a low voltage battery (40; 40A);
the charging control module (3; 3A) further comprises a second charging determination unit (305) which is configured to send a low voltage battery charging instruction to the charging logic unit (304) when a preset low voltage battery charging condition is satisfied; and
the charging logic unit (304) is configured to charge the low voltage battery (40; 40A) according to a preset low voltage battery charging logic upon receiving the low voltage battery charging instruction.

7. The solar battery system according to claim 6, wherein the low voltage battery charging condition is: at least one of the following conditions i) to iv) is achieved:
i) a charging enable information comprising a charging non-allowance instruction from the power battery management system (7; 7A) is received when the power of the buffer battery (20; 20A) reaches the first threshold and the boost condition is satisfied;
ii) the power of the buffer battery (20; 20A) reaches the first threshold and the boost condition is not satisfied;
iii) the power of the buffer battery (20; 20A) does not reach the first threshold, power of the power battery (30; 30A) reaches a preset third threshold and the boost condition is not satisfied;
iv) the buffer battery (20; 20A) is charging the power battery (30; 30A) intermittently.

8. A control method of a solar battery system, comprising the steps of:
monitoring power of a buffer battery (20; 20A);
sending (S20) a boost request to a power battery management system (7; 7A) when the power of the buffer battery (20; 20A) reaches a first threshold and a boost condition is satisfied;
using (S30) the power battery management system (7; 7A) to determine whether a power battery (30; 30A) can be charged, and to provide (S40) a charging parameter for the power battery (30; 30A) when it is determined that the power battery (30; 30A) can be charged;
charging the power battery (30; 30A) with electrical energy in the buffer battery (20; 20A) in accordance with the charging parameter.

9. The control method of a solar battery system according to claim 8, wherein the step of charging the power battery (30; 30A) with electrical energy in the buffer battery (20; 20A) in accordance with the charging parameter comprises:
charging (S50) the power battery (30; 30A) intermittently with the power in the buffer battery (20; 20A) in accordance with the charging parameter and a preset charging logic.

10. The control method of a solar battery system according to claim 8, wherein the step of using the power battery management system (7; 7A) to determine whether a power battery (30; 30A) can be charged comprises:
detecting a system state by the power battery management system (7; 7A), and it is determined that the power battery can be charged when the system state is normal.

11. The control method of a solar battery system according to claim 8, wherein the step of providing the charging parameter for the power battery (30; 30A) comprises:
detecting a power battery state, and obtaining remaining power or an output voltage of the power battery (30; 30A);
comparing the current remaining power or output voltage of the power battery (30; 30A) with a corresponding threshold to determine a current state level of the power battery (30; 30A);
determining the charging parameter according to a preset correspondence table of state levels and charging parameters.

12. The control method of a solar battery system according to claim 11, further comprising:
causing the power battery management system (7; 7A) to wake from a sleep state to an active state when the power battery management system (7; 7A) receives the boost request;
monitoring the power of the buffer battery (20; 20A) during charging of the power battery (30; 30A), and sending a stop charging request to the power battery management system (7; 7A) when the power of the buffer battery (20; 20A) is less than a second threshold;
converting the power battery management system (7; 7A) from the active state into the sleep state when the power battery management system (7; 7A) receives the stop charging request for the power battery (30; 30A).

13. The control method of a solar battery system according to claim 8, wherein the boost condition comprises: an ignition OFF signal has been received, and preferably, the boost condition further comprises: a current system temperature is lower than a preset temperature threshold.

14. The control method of a solar battery system according to claim 13, further comprising:
monitoring power of a low voltage battery (40; 40A);
charging the low voltage battery (40; 40A) according to a preset low voltage battery charging logic when a preset low voltage battery charging condition is satisfied.

15. The control method of a solar battery system according to claim 14, wherein the low voltage battery charging condition is: any one of the following conditions i) to iv) is achieved:
i) the power battery management system (7; 7A) does not allow to charge the power battery (30; 30A) when the power of the buffer battery (20; 20A) reaches the first threshold and the boost condition is satisfied;
ii) the power of the buffer battery (20; 20A) reaches the first threshold and the boost condition is not satisfied;
iii) the buffer battery (20; 20A) charges the power battery (30; 30A) intermittently, and
the low voltage battery charging logic corresponding to the low voltage battery charging condition is: the low voltage battery (40; 40A) is charged by the buffer battery (20; 20A).
